# EUROPEAN PATENT SPECIFICATION

(11) **EP 2 540 580 B1**
(45) Date of publication and mention of the grant of the patent: **25.03.2015**
(21) Application number: 11747106.0
(22) Date of filing: 21.01.2011
(51) Int. Cl.: B60R 21/2346, B60R 21/213, B60R 21/235, B60R 21/231, B60R 21/232

(54) **AIRBAG DEVICE**
AIRBAGVORRICHTUNG
DISPOSITIF DE TYPE COUSSIN DE SÉCURITÉ GONFLABLE

(30) Priority: 07.01.2011 JP 2011001625; 24.02.2010 JP 2010038275
(43) Date of publication of application: 02.01.2013
(73) Proprietor: Sumisho Airbag Systems Co., Ltd., Nagasaki 859-4536 (JP)
(72) Inventor: OBARA Kazuyuki, Matsuura-shi Nagasaki 859-4536 (JP); YOSHIDA Masatoshi, Matsuura-shi Nagasaki 859-4536 (JP); KAMI Yoshinori, Matsuura-shi Nagasaki 859-4536 (JP)
(74) Representative: Puschmann Borchert Bardehle Patentanwälte Partnerschaft mbB
(86) International application number: PCT/JP2011/051085
(87) International publication number: WO 2011/105142

(56) References cited:
- EP-A1- 0 505 568
- WO-A1-2009/110318
- JP-A- 8 104 194
- JP-A- 2001 355 144
- JP-A- 2003 002 151
- JP-A- 2006 249 655
- JP-A- 2007 269 184
- JP-A- 2009 056 830
- JP-A- 2009 292 348
- KR-A- 20080 030 411

## Description

The present invention relates to an airbag device that is provided in a vehicle such as an automobile, and inflates and expands an airbag using a gas supplied from an inflator to protect an occupant, and more particularly to an airbag device that efficiently prevents damage to the airbag by the gas supplied from an inflator to allow the occupant to be protected more reliably, and that is lightweight and has high storability.

Automobiles including an airbag device with an inflatable and expandable airbag in, for example, a steering wheel or an instrument panel have become widespread to protect an occupant in a driver seat or a passenger seat in a collision or an emergency of a vehicle such as an automobile. When a front surface of an automobile collides with another automobile or an obstacle (head-on collision), a bag can be rapidly inflated between an occupant and a structure in the automobile to ensure safety of the occupant.

In recent years, to protect the head or the like of an occupant when a side surface of an automobile collides with another automobile or an obstacle (lateral collision) in addition to the head-on collision, a curtain airbag device has been actually provided in an automobile, in which a curtain airbag folded and stored in a ceiling or a pillar above a side window of the automobile inflates to cover the side window in a collision.

As an example of such an airbag device, an airbag disclosed in JP-B2-3689845 has been known. In the airbag device described in JP-B2-3689845, an airbag is mounted to a roof rail on a side of a vehicle, and inflated and expanded by a gas from an inflator to block an opening on an inside of the vehicle and cover a vehicle wall, thereby mainly protecting heads of occupants in front and rear seats. In this airbag device, a cylinder type inflator is used. A metal guide cylinder (guide cylinder portion) is secured to an outer periphery of a cylindrical body of the inflator to surround a plurality of gas discharge ports at one end, and a tip opening of the guide cylinder is inserted into an airbag to mount the inflator to a gas introduction port in the airbag. In the airbag device, the guide cylinder guides, for example, a gas radially discharged from the gas discharge ports into an inner tube in the airbag, and the gas is supplied through the inner tube into the airbag to inflate and expand the airbag. The metal guide cylinder also has a function of reducing pressure of the gas discharged from the gas discharge ports of the inflator, or preventing the gas from being directly jetted to base fabric, thereby protecting the airbag.

JP-A-2009-214616 discloses an airbag device including: an airbag inflatable and expandable to cover a vehicle wall by introduction of a gas; and an inflator that radially discharges a gas from a plurality of gas discharge ports and supplies the gas into the airbag, the airbag including a gas introduction port to which the inflator is mounted, and an air chamber inflated by a gas from the gas introduction port, wherein the airbag device further includes a fabric-like member wound around the inflator in a plurality of turns so as to surround the plurality of gas discharge ports and open into the airbag. A lightweight and soft fabric-like member is provided in the inflator of the airbag device without providing a heavy metal guide cylinder, thereby allowing the gas supplied from the gas discharge ports to be guided, and allowing the airbag to be protected from the gas.

WO 2009/110318 A1 which reflects the preamble of claim 1 discloses an airbag device in which, without an inflator for the airbag device being provided with a metal guide tube, gas supplied from a gas ejection opening is appropriately guided and an airbag is protected from the gas. An inner tube is connected to a gas introducing opening formed in an airbag, and an inflator around which a cloth-like member is wound is inserted and fixed to a gas path inside the inner tube. The cloth-like member is wound multiple times around the inflator into a tubular shape so that the cloth-like member surrounds gas ejection openings formed in the inflator and so that one end of the cloth-like member is open toward the inside of the airbag, and then the cloth-like member is inserted into the inner tube. When the inflator is activated, gas from the gas ejection openings is guided into the inner tube by the cloth-like member and guided and supplied to gas chambers through the gas path to inflate and expand the airbag.

EP 0 505 568 A1 discloses a heat-resistant nonwoven fabric composed of 95 mu 50 % by weight of heat-resistant fibers and 5 SIMILAR 50 % by weight of thermoplastic resin, in which said fibers are bonded to each other with said thermoplastic resin formed into pillar-like fusion bodies between these fibers, the fabric being excellent in heat resistance, moldability and covering function and comparatively low in density, thus useful as an air filter and covering sheet of the heat-resistant molded product.

KR 2008 00304111 A discloses a dry type carbon nonwoven fabric for a plane heater and a method for producing the same are provided to disperse a carbon fiber having an excellent electric conductivity and an LM fiber having a thermal fusion property uniformly, thereby improving the uniformity in temperature of the plane heater. A carbon fiber and an LM fiber are mixed. The mixed fibers are supplied to a carding machine. The carbon fiber and the LM fiber are uniformly mixed to form a web during a carding process while a ratio of the carbon fiber and the LM fiber is regulated. The carbon fiber and the LM fiber of the web are thermally fused to form a web type nonwoven fabric through a laminating machine of 100-200 DEG C. The web type nonwoven fabric is compressed through a roller of below 100 DEG C. A half-finished product is manufactured by using the web type nonwoven fabric. In the carding process, the carbon fiber and the LM fiber are mixed non-directionally or unidirectionally

A vehicle is required to be reduced in weight to increase fuel consumption efficiency, and all members need to be reduced in weight. An effort to reduce the weight of an airbag device has also been made, and as an example, it has been considered that an inflator is reduced in size and weight. To generate a gas having the same volume as is conventional required for inflation and expansion using a small and lightweight inflator, a gas temperature needs to be increased. With reduction in size and weight of the inflator, a thermal load on an airbag tends to increase. Further, the airbag is required to function even under a high-temperature environment, for example, at 80°C and a severe environment temporarily increases a thermal load. To prevent damage to an airbag by a thermal load, using a metal guide cylinder has been considered as disclosed in JP-B2-3689845. However, the metal guide cylinder has high protective functionality of the airbag, but is heavy in weight and against the requirement to reduce weight of the airbag device. The metal guide cylinder needs to be secured to an outer periphery of an inflator by swaging, which tends to increase trouble of mounting to the inflator.

Meanwhile, using the fabric-like member disclosed in JP-A-2009-214616 is effective for solving the problem of the metal guide cylinder, but sometimes provides insufficient protective functionality of the airbag. In particular, when a pyro-type inflator that uses a solid gas generating agent or a hybrid-type inflator that uses both a high pressure gas and a solid gas generating agent is used under a high-temperature environment, a gas from the inflator has extremely high temperature, and thus many fabric-like members need to be used, for example, by laminating the fabric-like members to protect the airbag. This may prevent a sufficient reduction in weight, and further may reduce storability because of bulkiness.

Further, even if the metal guide cylinder or the fabric-like member is used, the high-temperature gas may come into contact with the airbag, and a material that forms the airbag may be thermally damaged, thereby causing insufficient inflation and expansion for protecting an occupant. In particular, assuming use under a high-temperature environment, a material is highly likely to be thermally damaged. To reduce thermal damage, the airbag is formed of coating base fabric coated with synthetic rubber such as chloroprene, chlorosulfonated olefin, or silicone because of high heat resistance, high air barrier properties (low air permeability), and high fire retardancy. However, the base fabric coated with synthetic rubber is heavy in weight, has unsatisfactory flexibility, and is high in production costs, and is thus insufficient for use as airbag base fabric.

The present invention has an object to provide an airbag device in which heat resistance of an airbag is increased, and even when a lightweight and small inflator that discharges a high-temperature gas is used under a high-temperature environment, the airbag can sufficiently inflate and expand to protect an occupant, and a lightweight fabric-like member is used to achieve reduced weight of the airbag device, and protective functionality of the airbag is efficiently increased, and a structure of the airbag device is simplified to prevent a reduction in storability because of bulkiness.

The above object is achieved by the special features of claim 1.

The airbag device of the present invention can protect the airbag from a high-temperature gas without providing a metal guide cylinder and without laminating many fabric-like members even when a lightweight and small inflator that discharges a high-temperature gas is used. Thus, the airbag is lightweight and has high storability. Also, a structure of the airbag device can be simplified to reduce production cost.

### Brief Description of Drawings

Fig. 1 shows an example of an airbag device according to the present invention.
Fig. 2 shows examples of weave structures in the vicinity of a boundary between an inner joining portion and an inflation portion.
Fig. 3 shows an example of a weave structure on an inner side of the vicinity of the boundary between the inner joining portion and the inflation portion.
Fig. 4 shows shape examples of a dot-shaped inner joining portion.
Fig. 5 illustrates a warp yarn direction of fabric that forms a curtain bag.
Fig. 6 is a partial enlarged view of a region Z in Fig. 1.
Fig. 7 shows an example of an inner bag.
Fig. 8 shows an example of an inner tube.
Fig. 9 shows weave structures in the vicinity of a boundary between an inner joining portion and an inflation portion used in Examples.
Fig. 10 shows a weave structure on an inner side of the vicinity of the boundary between the inner joining portion and the inflation portion used in Examples.
Fig. 11 shows a folded state of a bag used in Examples.
Fig. 12 shows, in an enlarged manner, a section of an intersection of warp and weft yarns.
Fig. 13 shows a state where synthetic resin is attached to a recess in the intersection of the warp and weft yarns.

The airbag device of the present invention needs to use the fabric-like member that surrounds the gas discharge port of the inflator, opens into the airbag, and includes at least a cellulosic fiber as a non-melting fiber. The fabric-like member may include known fabric-like members such as woven fabric, knitted fabric, or nonwoven fabric, and woven fabric having high barrier properties of a high-temperature gas is preferable. A structure of the woven fabric is not particularly limited, but a known structure may be used.

The non-melting fiber refers to a fiber without clear endothermic peak being found with melting in thermal measurement by DSC (differential scanning calorimetry). Using the non-melting fiber can prevent damage to a fabric-like member such as deformation or opening by melting even in contact with a high-temperature gas, and thus airbag protective functionality can be maintained. The non-melting fiber includes, for example, cellulosic fiber, acrylic fiber, aramid fiber, vinylon fiber, carbon fiber, ceramic fiber, and animal natural fiber. In view of availability, handling properties such as flexibility of fabric, and low cost, cellulosic fiber is particularly preferable. Two or more types of cellulosic fibers are preferably mixed.

The cellulosic fiber is fiber mainly made of cellulose, and includes, for example, natural fiber such as cotton, hemp, or jute, and recycled fiber such as rayon, Lyocell, or cupra.

In the present invention, the cellulosic fiber may be used alone or mixed with a fiber other than the cellulosic fiber. To prevent damage to the fabric-like member by melting, the fabric-like member preferably includes 30% to 100% by weight, more preferably 50% to 90% by weight, and further preferably 60% to 90% by weight of cellulosic fiber. The fiber other than the cellulosic fiber is not limited, but melting synthetic fiber is preferable because the synthetic fiber absorbs heat when melting by a high-temperature gas, thereby preventing heat transfer from the high-temperature gas to the airbag. Using the fiber other than the cellulosic fiber alone prevents heat transfer, but causes damage to the fabric-like member by melting, and sometimes provides insufficient airbag protective functionality. However, using the fiber and the cellulosic fiber together can prevent damage to the fabric-like member while taking advantage of preventing heat transfer. The fiber other than the cellulosic fiber preferably includes polyamide or polyester synthetic fiber in terms of increasing strength of the fabric-like member.

A manner of mixed use of the cellulosic fiber and the fiber other than the cellulosic fiber is not particularly limited, but a known manner can be used. For example, the mixing manner includes blend by mixing raw cotton, fluid combined filament by mixing yarns, covering, alignment by mixing in production of fabric, cross-weaving, cross-knitting, and laminating fabric made of a cellulosic fiber and fabric made of a fiber other than the cellulosic fiber, but not limited to them. To increase an effect of preventing damage to the fabric-like member, mixing by laminating fabric is preferable, and in particular, mixing by placing the fabric made of a fiber other than the cellulosic fiber on a side of the gas discharge port of the inflator, and placing the fabric made of the cellulosic fiber on the opposite side is preferable.

A type of the cellulosic fiber is not particularly limited, but a known type can be used. A short fiber is preferably used having a large gap between yarns and a high effect of preventing heat transfer. A type of the fiber other than the cellulosic fiber is not particularly limited, but a known type may be used depending on intended use. Specifically, when performance of preventing heat transfer of the fabric-like member is emphasized, a short fiber is preferably used, while increasing strength of the fabric-like member is emphasized, a long fiber is preferably used. A combination of the type of the cellulosic fiber and the type of the fiber other than the cellulosic fiber is not particularly limited, but a combination of a cellulosic fiber that is a short fiber and a fiber other than the cellulosic fiber that is a long fiber is preferable in terms of increasing an effect of preventing heat transfer of the fabric-like member and increasing strength.

The protection time against fire of the fabric-like member is preferably 3.5 seconds or more, more preferably 5 seconds or more, and further preferably 7 seconds or more. The protection time against fire is measured by a method provided under IS09151. Specifically, when fire having a certain heat quantity density (80 KW/m2±5%) is applied from a lower side of the fabric-like member, and a temperature increase with time is measured by a calorimeter mounted to an upper side of the fabric-like member, the protection time is defined as a time in which the temperature increases 12°C from before a start of measurement. A longer protection time favorably indicates less damage and lower heat transfer to the fabric-like member when the fire comes into contact with the fabric-like member, and thus indicates higher protective functionality against fire.

The fabric-like member of the present invention is preferably subjected to at least any of flame retardant treatment, antiflaming treatment, heat resisting treatment, and foaming treatment to reduce damage to the fabric-like member by a high-temperature gas. At least one surface of the fabric-like member may be subjected to flame retardant treatment, antiflaming treatment, heat resisting treatment, or foaming treatment. A surface of the fabric-like member on the side of the gas discharge port of the fabric-like member is preferably subjected to any of flame retardant treatment, antiflaming treatment, heat resisting treatment, and foaming treatment.

The flame retardant treatment is treatment for making the fabric-like member nonflammable, and the antiflaming treatment is treatment for preventing spread of fire. The flame retardant treatment is performed by applying a liquid containing a dissolved or dispersed flame retardant to a surface of the fabric-like member by a known method, for example, padding, spraying, or coating. The flame retardant is not particularly limited, but a known flame retardant can be used. For example, a bromine flame retardant such as pentabromodihpenyl ether, octabromodiphenyl ether, decabromodiphenyl ether, tetrabromobisphenol A, or hexabromocyclododecane; a phosphorous flame retardant such as phosphate like triphenyl phosphate, or red phosphorus; a chlorine flame retardant such as chlorinated paraffin; a metal hydroxide flame retardant such as aluminum hydroxide, or magnesium hydroxide; and an antimony flame retardant such as antimony pentoxide are exemplified. In terms of safety in combustion, the phosphorous flame retardant such as phosphate like triphenyl phosphate, or red phosphorus; and the metal hydroxide flame retardant such as aluminum hydroxide, or magnesium hydroxide are preferable, and the phosphorous flame retardant such as phosphate like triphenyl phosphate, or red phosphorus is more preferable.

The antiflaming treatment is performed by applying a liquid containing a dissolved or dispersed fireproofing agent to a surface of the fabric-like member by a known method, for example, padding, spraying, or coating. The fireproofing agent is not particularly limited, but a known fireproofing agent can be used. For example, aromatic condensed phosphate, phosphate amide, guanidine phosphate derivative, halogen-containing organophosphorous compound, guanyl sulfamide, or hexabromocyclododecane are exemplified. Aromatic condense phosphate, phosphate amide, guanidine phosphate derivative are preferable that can provide high antiflaming performance to many types of non-melting fibers.

The heat resisting treatment is treatment for providing a heat resisting layer on the surface of the fabric-like member to increase heat resistance. The heat resisting layer is not particularly limited as long as it increases heat resistance of the fabric-like member, and includes heat-resistant resin or rubber, a metal thin film, or a metallic oxide thin film. The heat-resistant resin or rubber includes, for example, silicone resin or silicone rubber, or fluororesin or fluororubber. The metal thin film includes, for example, an aluminum thin film, a nickel thin film, a copper thin film, a silver thin film, and a gold thin film. The metallic oxide thin film includes, for example, an alumina thin film, and a titanium oxide thin film. A method for providing the heat resisting layer is not limited, but a known method can be used. For resin or rubber, coating, laminating, padding, spraying, or the like are exemplified, for a metal thin film, vapor deposition, sputtering, electroless plating, or the like are exemplified, and for a metallic oxide, vapor deposition, sputtering, or the like are exemplified.

The foaming treatment is treatment for applying a foaming agent to the surface of the fabric-like member, and protecting the surface of the fabric-like member by the foaming agent generating a gas when the fabric-like member comes into contact with a high-temperature gas, thereby increasing heat resistance. The foaming agent includes, for example, a chemical foaming agent or a physical foaming agent. The chemical foaming agent is preferable because of easy addition to synthetic resin. The chemical foaming agent includes, for example, an inorganic foaming agent such as sodium hydrogen carbonate, ammonium hydrogen carbonate, or ammonium carbonate; or for example, an organic foaming agent such as a nitroso compound, an azo compound, a sulfonyl hydrazide compound, or a carbonamide compound. The physical foaming agent may include, for example, carbon dioxide or nitrogen gas. The chemical foaming agent is preferable because of easy addition to synthetic resin. In particular, the organic foaming agent is preferable having high compatibility with synthetic resin, high dispersion properties, and high processability. The organic foaming agent preferably contains at least N. An N-containing organic foaming agent includes, for example, a nitroso compound, an azo compound, a sulfonyl hydrazide compound, or a carbonamide compound. The nitroso compound includes, for example, N,N'-dinitroso pentamethylene tetramine. The azo compound is not particularly limited as long as it has at least one -N=N-group in a molecule. For example, azodicarbonamide, azobisisobutyronitrile, and barium azodicarboxylate are exemplified. The sulfonyl hydrazide compound is not particularly limited as long as it has at least one -SO₂-NHNH₂ group in a molecule. For example, 4,4'-oxybis (benzenesulfonyl hydrazide), p-toluene sulfonyl hydrazide, 2,4-toluene disulfonyl hydrazide, p,p-bis(benzenesulfonyl hydrazide) ether, and benzene-1,3-disulfonyl hydrazide, benzenesulfonyl hydrazide are exemplified. The carbonamide compound includes, for example, hydrazodicarbonamide amide. Preferably, an azo compound and a sulfonyl hydrazide compound are preferable in terms of safety, an azo compound is more preferable in terms of foaming properties, and azodicarbonamide is further preferable having a foaming temperature of 200°C or more and high storage stability.

The airbag device of the present invention includes an airbag inflatable and expandable by introduction of a gas, and an inflator that discharges a gas from a gas discharge port and supplies the gas into the airbag, and can be used for known airbags for a driver seat, a passenger seat, or a side. In particular, the airbag device is preferably used as an airbag device (curtain airbag device) for side surfaces that expands an airbag in a predetermined range on an inside of lateral sides of an automobile including a driver seat, a passenger seat, and a rear seat on a rear side of the vehicle to protect an occupant in the vehicle in a lateral collision or roll of the vehicle. In the embodiment below, a curtain airbag device that inflates and expands an airbag like a curtain from a roofrail or the like in a side upper portion of the vehicle to mainly protect heads of occupants on front and rear seats is taken as an example for description, but the present invention is not limited to this embodiment.

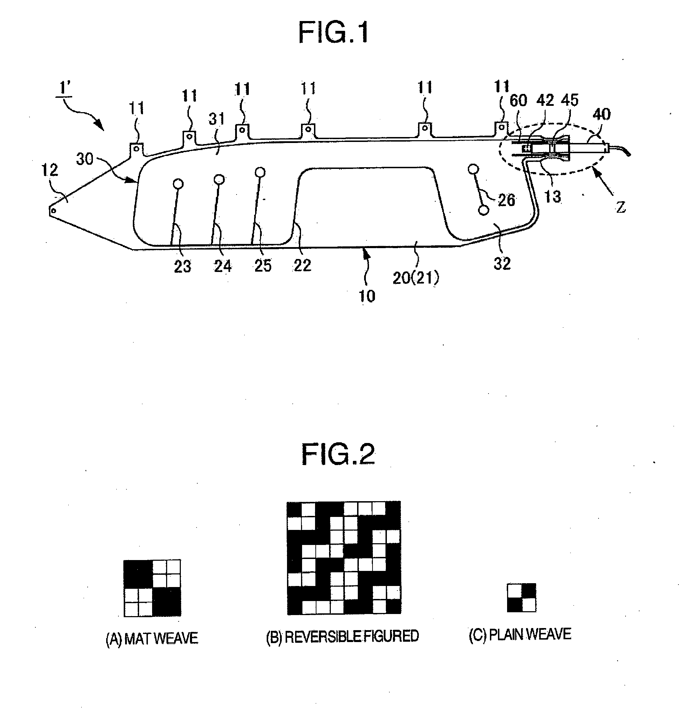

Fig. 1 is a schematic front view of essential portions of the airbag device of this embodiment, and a plan developed view showing an outline shape of an expanded airbag. Fig. 1 also shows an internal configuration of the airbag in perspective view.

In Fig. 1, a side of an inflator 40 described later (right side of a horizontally long airbag 10 in Fig. 1) is a rear side (rear pillar side) of a vehicle, and an opposite side (left side of the airbag 10 in Fig. 1) is a front side (front pillar side) of the vehicle. In the airbag device 1 of this embodiment, the airbag 10 is placed and housed in a roof rail (not shown) or the like in a side upper portion of the vehicle (upper side of the airbag 10 in Fig. 1), and expanded downward like a curtain from a housed state. Thus, the airbag 10 is inflated and expanded along a side window inside the vehicle (located on a back side of the sheet surface in Fig. 1)(not shown) so as to cover the entire side window, and is inflated and expanded between an occupant and a vehicle wall to block an opening in the vehicle.

Specifically, as shown, the airbag device 1 includes the airbag 10 inflatable and expandable so as to cover the vehicle wall by introduction (flow-in) of a gas, and the inflator 40 that is connected to one end (rear side of the vehicle) of the airbag 10 and supplies a gas into the airbag 10. The airbag device 1 includes other configurations as in a conventional device such as an airbag cover (not shown) that houses the airbag 10 and the inflator 40 in a predetermined state in non-operating time, and is provided inside the vehicle, and securing means (not shown) for securing the airbag 10 and the inflator 40 to the vehicle.

The airbag 10 has a horizontally long substantially bag-like shape according to a shape of the side window of the vehicle to be covered with the airbag 10, and has a plurality of (six in Fig. 1) substantially rectangular upper mounting tabs 11 to be mounted to the roofrail of the vehicle along an upper edge. The airbag 10 also has a substantially triangular front mounting piece 12 protruding forward of the vehicle, and a distal end (protruding end) of the front mounting piece 12 is mounted to the front pillar portion of the vehicle. The mounting pieces 11 and 12 of the airbag 10 are secured to a predetermined position in the vehicle by securing means such as a bolt and mounted to the vehicle. Before inflated, the airbag 10 is housed and placed in the airbag cover or the like provided in each part of the vehicle. At this time, the airbag 10 is housed in a downwardly inflatable and expandable manner such as by being sequentially folded toward the mounting pieces 11 and 12 (toward the upper edge), or by being wound from a lower edge side toward an upper edge side into the vehicle. Meanwhile, when the inflator 40 is operated, the airbag 10 is inflated from the housed state to push the airbag cover open, and inflated and expanded mainly downward of the vehicle like a curtain.

The airbag 10 is formed of at least two pieces of fabric joined at an outer peripheral joining portion 22 provided at an outer peripheral edge, and an inner joining portion 23 provided inside the outer peripheral joining portion. A method of joining the pieces of fabric is not particularly limited, but a known method may be used. For example, the method includes a machine-sewing method in which pieces of fabric having a predetermined shape formed by cutting fabric are laminated, and joining portions are sewn using a sewing machine; a bonding method in which pieces of fabric having a predetermined shape formed by cutting fabric are laminated, joining portions are bonded using an adhesive; and an OPW method in which a joining portion is formed by interlacing weaving yarns in a predetermined position and into a predetermined shape in a weaving stage using a loom including a Jacquard machine. The OPW method having high airtightness and high shape stability is preferable.

The fabric used is not limited as long as it meets required properties, but is preferably woven fabric. Original yarn used in the fabric is not limited, but is preferably a synthetic long fiber of polyamide, polyester, or acrylic fiber having high strength and increasing strength of the airbag 10. To prevent melting by a high-temperature gas discharged from the inflator, nylon 66 fibers or polyethylene terephthalate fibers having a high melting point and a high heat capacity are particularly preferable. In the case of using a pyro-type inflator that uses a solid gas generating agent or a hybrid-type inflator that uses a high pressure gas and a solid gas generating agent in combination, nylon 66 fibers are more preferable because melting may occur due to the high-temperature gas from the inflator or a combustion residue.

Fineness of the original yarn is not particularly limited, but is preferably 78 to 940 dTex and more preferably 235 to 475 dTex. Fineness of 78 dTex or higher can endure a dynamic load by the gas discharged from the inflator, and reduce thermal damage due to a high-temperature gas and a combustion residue in the case of using the pyro-type inflator or the hybrid-type inflator. Fineness of 940 dTex or less provides satisfactory strength, provides many intersections of warp and weft yarns even when woven with high density, prevents an aperture from being generated in the outer peripheral joining portion and the inner joining portion by internal pressure in operation. This prevents a gas from flowing out from the portions. The finished woven fabric is thin and lightweight, thereby increasing storability of the airbag 10.

Single yarn fineness of the original yarn is not particularly limited, but is preferably 6 to 15 dtex. Single yarn fineness of 6 dtex or more reduces a specific surface area of single yarn in the case of using the pyro-type inflator or the hybrid-type inflator, thereby reducing thermal damage due to a high-temperature gas or a combustion residue. When base fabric is impregnated with water and then impregnated with water-based synthetic resin as described later, the high single yarn fineness and a large gap between single yarns allow smooth replacement from water to resin, thereby achieving low air permeability. Fineness of 15 dtex or less can reduce hardness of base fabric.

In use of woven fabric, the original yarn may be used directly as the warp yarn in weaving, since ordinary plain weave fabric is produced when the airbag 10 is produced by the machine-sewing method or the bonding method. In some cases, the original yarn may be preferably used after being subjected to oiling, waxing or sizing. When the airbag 10 is produced by the OPW method, the outer peripheral joining portion and the inner joining portion are formed by interlacing the warp and weft yarns of predetermined portions of two pieces of fabric with the two pieces of fabric being simultaneously woven. Thus, the weave density of the outer peripheral joining portion and the inner joining portion is doubled as compared with that of the inflation portion, and thus a heavy load is applied to the warp yarn during weaving. Thus, the yarn easily becomes fluffy and many weave defects occur, and breakage of the original yarn occurs in some cases. Therefore, sizing is preferably performed.

The weave density may be properly selected depending on the fineness of the original yarn to be used. For example, the weave density with the warp and weft yarns in total of 90 to 110/2.54 cm is preferable for the fineness of 470 dTex. Approximately 125/2.54 cm is preferable for the fineness of 350 dTex, and approximately 145/2.54 cm is preferable for the fineness of 235 dTex. Such ranges of weave density facilitate weaving and improve weaving performance and woven fabric quality. Further, the woven fabric can endure the dynamic load by the gas discharged from the inflator and reduce the thermal load. The weave density is not necessarily the same for the warp yarn and the weft yarn, and there may be a difference in density in view of weaving efficiency or a direction of a dynamic load by a discharged gas.

For the machine-sewing method and the bonding method, a weave structure of fabric to be used is not particularly limited, but a plain weave structure is generally used. For the OPW method, a weave structure of the inflation portion except the outer peripheral joining portion, the inner joining portion, and the vicinity of the boundary between the joining portions and the inflation portion is not particularly limited, but a plain weave structure is generally used.

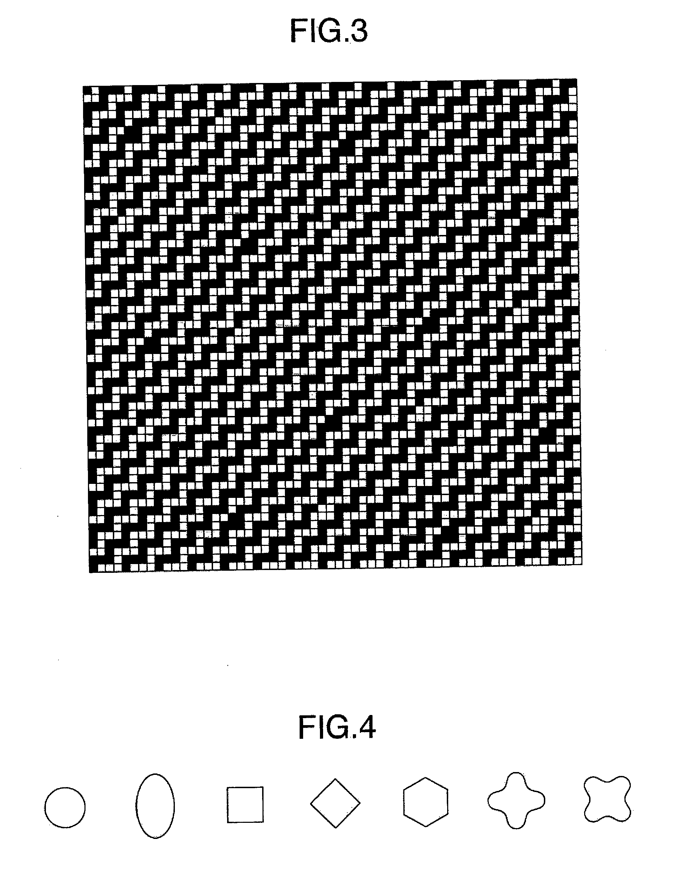

When the joining portions are formed by the OPW method, the weave structure of the joining portion in the vicinity of the boundary between the joining portions and the inflation portion is not particularly limited, but for example, various weave structures such as (A) mat weave, (B) reversible figured, and (C) plain weave as shown in Fig. 2 may be combined and properly repeated. Further, the weave structure of the portions other than the vicinity of the boundary between the joining portions and the inflation portion is not particularly limited. For example, partial node connection weave as shown in Fig. 3 is preferable to reduce the number of intersections.

When the joining portions are formed by the machine-sewing method, the two pieces of woven fabric may be sewn using an ordinary sewing machine, or a so-called pattern sewing machine that automatically sews with the form input to the sewing machine. At this time, when airtightness is particularly required, a sealant is held between the two pieces of woven fabric and sewn, thereby preventing an outflow of a gas through seams. Any type of sealant may be used, but a silicone sealant is preferable having a high effect of preventing an outflow of the gas and having heat resistance.

When the joining portions are formed by the bonding method, an adhesive is applied between the two pieces of woven fabric, and the two pieces of fabric are held between two rolls as a pressing machine or a rolling machine having a heating mechanism, and thus a compression force is applied to the portion to which the adhesive is applied, thereby joining the two pieces of fabric. Any type of adhesive may be used at this time, but a silicone adhesive is used when an outflow of a gas is to be prevented.

The airbag of the present invention needs to be inflated and expanded as quickly as possible to increase restraint performance of an occupant. Thus, to prevent an outflow of a gas from base fabric, or the outer peripheral joining portion and the inner joining portion, it is preferable that synthetic resin, particularly, synthetic resin to which a foaming agent is added is attached to base fabric described later, and/or known coating is applied to the base fabric. A coating agent and a coating method used for coating are not particularly limited, but a silicone coating agent is generally used, and coating is generally applied using a knife coater. An amount of applied coating agent is not particularly limited, but the amount depends on properties of silicone resin to be used and on which method is used, the OPW method, the machine-sewing method, or the bonding method. A preferable amount is 15 to 50g/m².

The inner joining portion preferably includes a plurality of dot-shaped inner joining portions. If the inner joining portions have a dot shape and are independent of one another and also independent of the outer peripheral joining portion, favorably, a gas from the inflator can be distributed to the inflation portion in a short time, excessive stress concentration does not occur in the outer peripheral joining portion and/or the inner joining portions, and the curtain bag can be stably and more quickly inflated and expanded without damage. Thus, in a collision, even if an occupant is in a seating posture other than regular seating posture, and quickly comes into contact with the airbag 10, or comes into contact with portions other than a regular protection portion of the airbag 10, sufficient protective functionality can be achieved. Even if the airbag 10 comes into contact with the occupant when inflated and expanded, the airbag does not block a flow of a gas. Thus, the gas can easily flow so as to avoid the occupant, thereby reducing the risk of damage to the occupant.

The dot-shaped inner joining portion is a non-inflation portion formed by integrating two pieces of fabric by interlacing weaving yarns that form two pieces of fabric, sewing, or bonding, and includes both a spot where top and bottom pieces of fabric are integrated on an entire surface of the non-inflation portion and a spot where the top and bottom pieces of fabric are integrated by surrounding the non-inflation portion and insides thereof are not integrated. The dot-shaped inner joining portion can be formed as a line segment of a straight line or a curved line, or formed into a shape as shown in Fig. 4. The dot-shaped inner joining portion can be formed into, for example, a circle, an ellipse, a rectangle, a rhombus, a polygon, or partially deformed shapes thereof. A circle and an ellipse are preferable because stress hardly concentrates on the dot-shaped inner joining portion. A circle is particularly preferable, but an ellipse having an aspect (length-to-width) ratio of 5 or less is also preferable. According to the present invention, the dot-shaped inner joining portion may be formed by integrating the entire surfaces of these shapes by interlacing weaving yarns, sewing, or bonding. Also, the dot-shaped inner joining portion may be formed as the non-inflation portion that has only outer peripheral edges of these shapes integrated by interlacing weaving yarns, sewing, or bonding, and the insides of which are not integrated but not inflated by a gas.

It is preferable that 15 to 160 dot-shaped inner joining portions are provided. When the number of the inner joining portions is smaller than 15, an area of each inner joining portion needs to be extremely large to provide a proper thickness in inflation of the airbag 10. Thus, a proper inflation portion is difficult to obtain to reduce fabric tension and reduce bending rigidity. Meanwhile, when the number of inner joining portions exceeds 160, the area of each inner joining portion needs to be extremely small to provide a proper thickness in inflation of the airbag 10, and the airbag 10 may break due to stress concentration. Also, there is a risk of preventing proper gas diffusion.

The dot-shaped inner joining portion preferably has an area of 0.7 cm²/each to 13 cm²/each, and more preferably has an area of 2 cm²/each to 12 cm²/each. If the area of each dot-shaped inner joining portion is 0.7 cm²/each or more, the inflation portion becomes moderate, the load on the portion is small, thereby preventing breakage. Further, if the area of each dot-shaped inner joining portion is 13 cm²/each or less, the inflation portion also becomes moderate, predetermined internal pressure is obtained, and the thickness in inflation of the curtain bag also becomes moderate.

All the shapes and the areas of the dot-shaped inner joining portions may be the same in the airbag 10, or the dot-shaped inner joining portions of different shapes and areas may be combined. The shapes and the areas of the dot-shaped inner joining portions are preferably set in consideration of a size and a shape of the airbag 10, an output and a position of a gas generator to be used and the like.

The plurality of dot-shaped inner joining portions are preferably provided substantially across the entire surface of the inflatable region of the airbag 10. Being provided substantially across the entire surface of the inflatable region means that within a distance of 50% of a length in a longitudinal direction of the airbag 10 from the dot-shaped inner joining portion, at least another dot-shaped inner joining portion is provided, and that only the dot-shaped inner joining portion is provided as the inner joining portion. It is preferable that at least another dot-shaped inner joining portion is provided within a distance of 40%, more preferably 30% of the length in the longitudinal direction of the curtain bag from the dot-shaped inner joining portion. With this form, the gas from the inflator can be distributed to the inflation portion in a short time, excessive stress concentration does not occur in the joining portions, and the airbag 10 can be stably inflated and expanded more quickly without damage. Further, the plurality of dot-shaped inner joining portions are properly provided across the entire surface of the inflatable region, and thus an increase in thickness in inflation and expansion more than necessary can be prevented. Thus, even when a gap between the occupant and a window sill is small, the airbag can be inflated and expanded there between.

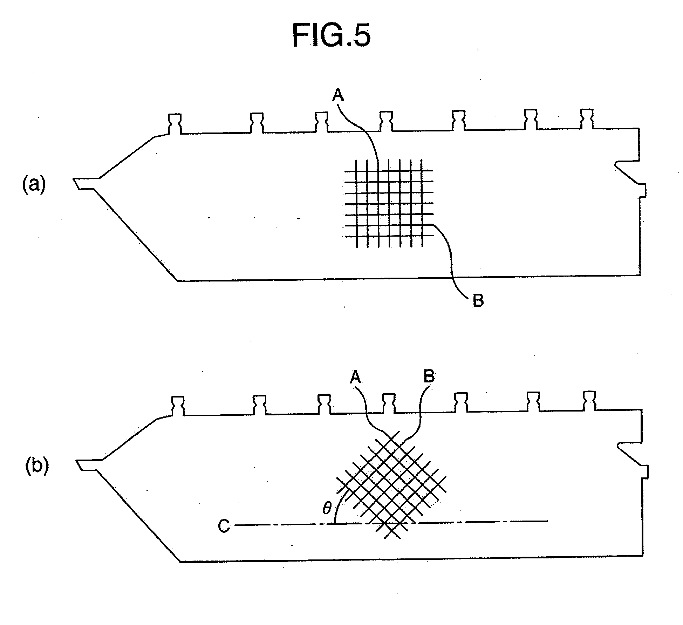

In the conventional airbag 10, as shown in Fig. 5(a), woven fabric that forms the airbag 10 is woven so that a warp yarn direction is substantially parallel to the longitudinal direction of the airbag 10. In Fig. 5(a), reference character A denotes warp yarn, and reference character B denotes weft yarn.

However, in a process where the airbag 10 is inflated and expanded downward from a roof of an automobile, relatively large tension is applied in a width direction of the airbag 10, that is, in a weft yarn direction of the woven fabric, and a thermal load by a high-temperature gas is further applied, which may cause an aperture in the joining portion of the airbag 10.

Weaving may be performed in a conventional arrangement, but for example, as shown in Fig. 5(b), weaving is preferably performed in an arrangement in which a parallel line C in the longitudinal direction of the airbag 10 and a direction of the warp yarn A that forms the airbag 10 form an angle θ of 20° to 70°. For example, when θ is 45°, and a force applied in the width direction in downward inflation of the airbag 10 is 1, tension of the warp and weft yarns is 1/√2, and tension in the width direction is dispersed. Thus, stress concentration on the joining portion is relieved to prevent an aperture in the joining portion. Thus, a high-temperature gas intensively passes through the joining portion with an aperture, thereby preventing an excessive thermal load from being locally applied, and increasing safety against breakage of the airbag 10.

When the angle θ between the longitudinal direction of the airbag 10 and the warp yarn direction of the woven fabric is 45°, the tension is equally dispersed to the warp and weft yarns, but the angle θ may be determined in view of cutting strength or coefficient of elasticity of the warp and weft yarns of the woven fabric, or loss due to the arrangement of the airbag 10. Generally, the angle θ is preferably 20 to 70°, and within this range, the above-described advantage is obtained.

For the airbag 10 by the machine-sewing method or the bonding method, fabric is cut into a predetermined shape, and at this time, the longitudinal direction of the airbag and the warp yarn direction of the woven fabric may be determined as described above.

In the airbag device 1 shown in Fig. 1, fabric 20 and fabric 21 protrude outward in an upper portion at one end (herein, rear side of the vehicle) of the airbag 10. A portion without a joint between the fabric 20 and 21 is provided in the outer peripheral joining portions 22 joining the fabric 20 and 21 to form a substantially cylindrical gas introduction port 13. Specifically, the gas introduction port 13 is an opening that is formed by opening a part of the rear air chamber 32 to the outside of the airbag 10 and provides communication between inside and outside of the air chamber 30, and functions as a gas inlet (supply port) that introduces a gas from the inflator 40 into the airbag 10.

The inflator 40 is a substantially cylindrical cylinder-type gas generator. A known method of generating a gas can be used and is not particularly limited. For example, a pyro-type inflator that uses a solid gas generating agent such as chemicals, a stored gas type inflator that uses an inert gas such as helium, argon, or nitrogen charged into a gas cylinder solely and/or in combination under high pressure, and a hybrid type inflator that uses a solid gas generating agent and a high pressure inert gas in combination are exemplified. The pyro-type inflator and the hybrid-type inflator are preferable because they are small and lightweight, and the pyro-type inflator is more preferable.

A gas discharge port 42 is formed at one end (distal end in the airbag 10 in the drawing) in the longitudinal direction of the inflator 40. The shape and the number of the gas discharge ports are not limited, but a plurality of gas discharge ports 42 are preferably formed in a circumferential direction to radially discharge a gas, because reaction of discharge of the gas can be cancelled to ensuring safety. In the airbag device 1, one end on the side of the gas discharge port 42 of the inflator 40 is inserted into the gas introduction port 13 of the airbag 10, and the airbag 10 is held and secured to the outer periphery of the inflator 40 by an annular clamp (band) 45 with the gas discharge port 42 being located near the rear air chamber 32.

As such, the inflator 40 is mounted to the gas introduction port 13. And then, a gas radially discharged from the plurality of gas discharge ports 42 of the inflator 40 is introduced from the gas introduction port 13 into the airbag 10, and introduced into the air chamber 30 to inflate and expand the airbag 10. At this time, it is important that a fabric-like member 60 is provided that includes at least a cellulosic fiber and surrounds the gas discharge ports so as to open into the airbag 10. As for a placement manner of the fabric-like member 60, a fabric-like winding member formed by cutting fabric into a strip shape having a predetermined shape and size is prepared, and sequentially wound around an outer periphery of the inflator 40 including the gas discharge ports 42 one to five turns, preferably one to three turns. Within this range of turns, the airbag 10 can be protected, and lightweight properties and high storability of the airbag device 1 are not reduced. At this time, the fabric-like member 60 is placed to protrude to the rear air chamber 32 from the distal end of the inflator 40, entirely surrounds the plurality of gas discharge ports located inside (inner peripheral side) from the outer periphery, and is wound around the inflator 40 so that one end (open end) opens into the airbag 10.

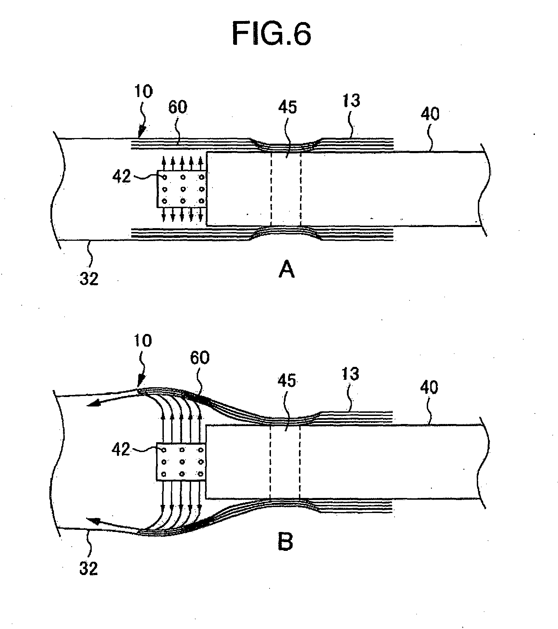

Fig. 6 is a partial enlarged view showing a region Z including the fabric-like member 60 in Fig. 1, and shows states in discharge of the gas from the inflator 40 sequentially in Figs. 6A and 6B. In the airbag device 1, the inflator 40 on which the fabric-like member 60 is placed is inserted into the gas introduction port 13 in the airbag 10, and the fabric-like member 60 is collectively held and secured to the outer periphery of the inflator 40 by the clamp 45. As such, the fabric-like member 60 having a multilayer cylindrical shape is placed between the gas discharge ports 42 in the inflator 40 and the airbag 10.

The airbag device 1 receives a gas (see arrows in Fig. 6A) radially discharged outward from the plurality of gas discharge ports 42 by the fabric-like member 60, and guides the gas toward an opening end of the fabric-like member 60 inflated by pressure of the gas (see arrows in Fig. 6B). Thus, the gas generated by the inflator 40 is directed and guided into the airbag 10 on the axially outside of the inflator 40, and then supplied into the air chamber 30 of the airbag 10. Thus, the fabric-like member 60 functions as a guide member that guides the gas from the inflator 40. The fabric-like member 60 also functions as a protection member for protecting the airbag 10 such as by receiving the high-temperature gas discharged from the gas discharge ports 42 to relieve pressure or heat, or preventing the high-temperature gas from being directly jetted to the airbag 10 to reduce damage for the airbag 10.

As for another placement manner of the fabric-like member 60, one to five, preferably one to three pieces of fabric cut into a strip shape having a predetermined shape and size are laminated on the outer periphery of the inflator 40 including the gas discharge ports 42 so as to partially open into the airbag along the inflator. With this number of pieces, the airbag 10 can be protected, and lightweight properties and high storability of the airbag device 1 are not reduced. The fabric-like member 60 is preferably laminated on the inflator 40 so as to protrude to the rear air chamber 32 from the distal end of the inflator 40, entirely or partially surround the plurality of gas discharge ports located inside (inner peripheral side) from the outer periphery, and open into the airbag 10 at an open end or a part along the inflator.

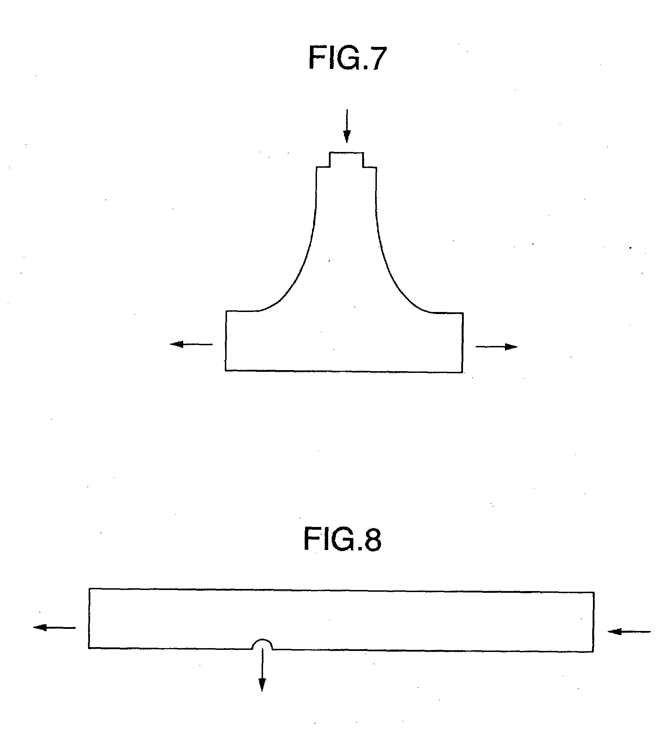

As for another placement manner of the fabric-like member 60, fabric may be previously machine-sewn or bonded to be used as a fabric-like member shown in Fig. 7, that is, a fabric-like member called an inner bag or a bag-in-bag. Also, fabric may be previously woven or knitted, or plain fabric is machine-sewn or bonded to be used as a tubular fabric-like member shown in Fig. 8, that is, a fabric-like member called an inner tube.

While the placement manners of the fabric-like member 60 described above may be used solely, a plurality of placement manners may be used in combination. In particular, a combination of the placement manner of fabric being wound around the outer periphery of the inflator and the placement manner of an inner tube or an inner bag, or a combination of the placement manner of fabric being laminated on the inflator 40 and an inner tube or an inner bag are preferable because protection of the airbag 10 and smooth guiding of a gas to an inflatable and expandable region of the airbag 10 can be simultaneously achieved. The fabric to be wound or laminated and the inner tube or the inner bag may be made of the same material, but the fabric to be wound or laminated is preferably fabric including at least a cellulosic fiber, and the inner tube or the inner bag is preferably a fiber other than the cellulosic fiber. The fabric to be wound or laminated, and the inner tube or the inner bag may be subjected to any of the flame retardant treatment, the antiflaming treatment, the heat resisting treatment, and the foaming treatment, but the fabric to be wound or laminated is preferably subjected to any of the flame retardant treatment, the antiflaming treatment, and the foaming treatment, and an inner surface of the inner tube or the inner bag is preferably subjected to the heat resisting treatment.

In an airbag device of the present invention, it is preferable that synthetic resin to which at least a foaming agent is added is attached to an airbag. In particular, synthetic resin is attached in a specific manner, specifically, synthetic resin to which at least a foaming agent is added is attached to at least 50% of surfaces of intersections of warp and weft yarns, and a surface layer to a fifth layer of single yarns that form a yarn. With such a particular attachment manner, heat resistance of the airbag is noticeably increased by foaming of a surface of fabric and also foaming in the yarn. Further, air permeability at differential pressure of 100 kPa is 5 cc/cm²/sec or less, and bending resistance measured by a cantilever method is 100 mm or less. With air permeability at differential pressure of 100 kPa being 5 cc/cm²/sec or less, a generally used curtain airbag can achieve maximum internal pressure and internal pressure maintaining properties required for restraining an occupant and providing protective functionality. Bending resistance measured by the cantilever method being 100 mm or less increases storability of the curtain airbag because of flexibility, thereby reducing the risk of damaging skin of human body in operation. In the present invention, both low air permeability and high flexibility are preferably achieved. For low air permeability, an amount of resin to be attached is generally increased, but this may harden fabric. On the contrary, reducing the amount of resin to be attached to reduce flexibility or performing kneading after attachment of resin may increase air permeability, and thus it has been difficult to achieve both properties.

The airbag of the present invention needs to be inflated and expanded as quickly as possible. To prevent an outflow of a gas from base fabric or the outer peripheral joining portion and the inner joining portion, it is preferable that synthetic resin to which a foaming agent is added is attached to the base fabric.

Known synthetic resin can be used and is not particularly limited. In terms of high adhesiveness to original yarn and low air permeability, synthetic resin consisting of an element selected from C, H, N and O is preferably used. In particular, synthetic resin consisting of an element selected from C, H and O is preferably used in terms of safety in combustion. Specifically, synthetic resin includes at least one type of resin selected from the group consisting of polyurethane resin and copolymer resin thereof, and polyamide resin and copolymer resin thereof, which contain C, H, N and O, acrylic resin and copolymer resin thereof, polyester resin and copolymer resin thereof, polyvinyl resin and copolymer resin thereof, and polyvinyl acetate resin and copolymer resin thereof, which contain C, H and O. At least one type of resin selected from the group consisting of acrylic resin and copolymer resin thereof, polyester resin and copolymer resin thereof, polyvinyl resin and copolymer resin thereof, and polyvinyl acetate resin and copolymer resin thereof, which contain C, H and O, are preferable. In particular, in view of elasticity and adhesiveness to fabric, at least one type of resin selected from the group consisting of acrylic resin and copolymer resin thereof, and polyvinyl acetate resin and copolymer resin are preferable. As for specific examples of the resin, polyurethane resin is "SUPERFLEX (registered trademark)" manufactured by DAI-ICHI KOGYO SEIYAKU CO.LTD., "HYDRAN (registered trademark)" manufactured by Dainippoin Ink and Chemicals, Inc., polyamide resin is "Toresin" manufactured by Teikoku Chemical Industry Co.,Ltd, acrylic resin is "Ultrasol (registered trademark)" manufactured by GANZ CHEMICAL CO.,LTD, and "VONCOAT (registered trademark)" manufactured by Dainippoin Ink and Chemicals, Inc., polyester resin is "VYLONAL (registered trademark)" manufactured by TOYOBO CO.,LTD., and vinyl acetate copolymer resin is "RD-321" manufactured by GOO CHEMICAL CO.,LTD. These are merely examples of synthetic resin that can be used in the present invention, and synthetic resin in the present invention is not limited to them.

As a foaming agent, for example, a chemical foaming agent or a physical foaming agent can be used. The chemical foaming agent includes, for example, an inorganic foaming agent such as sodium hydrogen carbonate, ammonium hydrogen carbonate, or ammonium carbonate, for example, an organic foaming agent such as a nitroso compound, an azo compound, a sulfonyl hydrazide compound, or a carbonamide compound. The physical foaming agent may include, for example, carbon dioxide or nitrogen gas. The chemical foaming agent is preferable because of easy addition to synthetic resin. In particular, the organic foaming agent is preferable having high compatibility with synthetic resin, high dispersion properties, and high processability. The organic foaming agent preferably contains at least N. An N-containing organic foaming agent includes, for example, a nitroso compound, an azo compound, a sulfonyl hydrazide compound, or a carbonamide compound. The nitroso compound includes, for example, N,N'-dinitroso pentamethylene tetramine. The azo compound is not particularly limited as long as it has at least one -N=N-group in a molecule. For example, azodicarbonamide, azobisisobutyronitrile, and barium azodicarboxylate are exemplified. The sulfonyl hydrazide compound is not particularly limited as long as it has at least one -SO₂-NHNH₂ group in a molecule. For example, 4,4'-oxybis (benzenesulfonyl hydrazide), p-toluene sulfonyl hydrazide, 2,4-toluene disulfonyl hydrazide, p,p-bis(benzenesulfonyl hydrazide) ether, and benzene-1,3-disulfonyl hydrazide, benzenesulfonyl hydrazide are exemplified. The carbonamide compound includes, for example, hydrazodicarbonamide amide. Preferably, an azo compound and a sulfonyl hydrazide compound are preferable in terms of safety, an azo compound is more preferable in terms of foaming properties, and azodicarbonamide is further preferable having a foaming temperature of 200°C or more and high storage stability.

A state where a foaming agent is added to synthetic resin is not particularly limited, and a state where a foaming agent is dissolved in the synthetic resin, a state where particles of a foaming agent are dispersed in synthetic resin, a state where synthetic resin and a foaming agent are phase-separated in a sea-island structure, or the like are exemplified. The state where a foaming agent is dissolved in synthetic resin is preferable because of high uniformity of foaming.

Synthetic resin to which a foaming agent is added has high processability and is thus preferably used with a solvent. In particular, water-based synthetic resin using water as a solvent is preferable because of a light load of a removed solvent on environment. The water-based synthetic resin refers to a water-based solution or water dispersions (water-based emulsion) of synthetic resin to which a foaming agent is added. Such a water-based solution or water dispersions preferably does not contain an organic solvent that is often added to increase solubility or dispersibility of synthetic resin. When a small amount of water-based synthetic resin is used in the case of use of an organic solvent, contraction stress of fiber that forms base fabric increases at a temperature required for removing the organic solvent, which tends to increase a hole between fibers and increase air permeability of the base fabric.

Further adding a plasticizer is preferable to provide flexibility to synthetic resin to which a foaming agent is added. Any known plasticizer may be used, but a plasticizer of at least one compound selected from esters, alkylamides, and phosphites. In particular, at least one compound selected from esters is preferable because of compatibility with the synthetic resin and the foaming agent used in the present invention to prevent uneven dispersion after attachment. Phosphates are more preferable.

The ester plasticizer includes, for example, phthalates, fatty acid esters, polyalcohol esters, phosphates, trimellitates, hydroxybenzoic acid esters, or the like. The phthalates include, for example, dimethyl phthalate, diethyl phthalate, dibutyl phthalate, diheptyl phthalate, di-2-ethylhexyl phthalate, di-n-octyl phthalate, diisodecyl phthalate, ditridecyl phthalate, dicyclohexyl phthalate, butyl benzyl phthalate, diisononyl phthalate, ethyl phthalyl ethyl glycolate, butyl phthalyl butyl glycolate, diundecyl phthalate, di-2-ethylhexyl tetrahydrophthalate, or the like.

The fatty acid esters includes, for example, dibasic saturated carboxylic ester such as dimethyl adipate, dibutyl adipate, diisobutyl adipate, dibutyl diglycol adipate, di-2-ethylhexyl adipate, di-n-octyl adipate, diisodecyl adipate, diisononyl adipate, di-n-mixed alkyl ester adipate, dimethyl sebacate, dibutyl sebacate, di-2-ethylhexyl sebacate, di-2-ethylhexyl azelate, di-2-ethylhexyl mixed acid ester, or dodecanedioic acid bis-2-ethylhexyl ester, dibasic unsaturated carboxylic ester such as dibutyl fumarate, bis-2-fumarate methylpropane, bis-2-ethylhexyl fumarate, dimethyl maleate, diethyl maleate, dibutyl maleate, or bis-2-ethylhexyl maleate, butyl oleate, isobutyl oleate, acetyl butyl ricinoleate, acetyl tributyl citrate, 2-ethylhexyl acetate, or the like.

The polyalcohol esters include, for example, 2,2,4-trimethyl-1,3-penta-diol monoisobutyrate, 2,2,4-trimethyl-1,3-penta-diol diisobutyrate, diethylene glycol dibenzoate, triethylene glycol di-2-ethyl butyrate, pentaerythritol monooleate, pentaerythritol monostearate, pentaerythritol alkyl ester, monoglyceride behenate, 2-ethylhexyl triglyceride, glycerin triacetate, glycerin tributyrate, or the like.

The phosphates include, for example, trimethyl phosphate, triethyl phosphate, triphenyl phosphate, tricresyl phosphate, cresyl diphenyl phosphate, tris(t-butylated phenyl) phosphate, tris(i-propylated phenyl) phosphate, 1,3-phenylene-bis(diphenyl phosphate), 1,3-phenylene-bis (dixylenyl) phosphate, bisphenol A bis(diphenyl phosphate), (5-ethyl-2-methyl-1,3,2-dioxaphosphine-5-yl) methyl dimethyl phosphonate-p-oxide, bis(5-ethyl-2-methyl-1,3,2-dioxaphosphine-5-yl) methylmethyl phosphonate-p,p'-dioxide, or the like.

The trimellitates include, for example, tributyl trimellitate, tri-2-ethylhexyl trimellitate, tri-n-octyl trimellitate, triisononyl trimellitate, triisodecyl trimellitate, tri-mixed alcohol ester trimellitate, or the like.

The hydroxybenzoic acid esters include, for example, ethylhexyl o- or p-hydroxybenzoate, hexyldecyl o- or p-hydroxybenzoate, ethyldecyl o- or p-hydroxybenzoate, methyl o- or p-hydroxybenzoate, butyl o- or p-hydroxybenzoate, hexyl o- or p-hydroxybenzoate, n-octyl o- or p-hydroxybenzoate, decyl o- or p-hydroxybenzoate, dodecyl o- or p-hydroxybenzoate, or the like.

The alkylamides include, for example, alkylamide toluenesulfonates, and alkylamide benzenesulfonates. The alkylamide toluenesulfonates include, for example, N-ethyl-o-butylamide toluenesulfonates, N-ethyl-p-butylamide toluenesulfonates, N-ethyl-o-2-ethylhexyl amide toluenesulfonates, N-ethyl-p-2-ethylhexyl amide toluenesulfonates, or the like. The benzene alkylamides benzenesulfonates include, for example, propylamide benzenesulfonate, butylamide benzenesulfonate, 2-ethylhexyl amide benzenesulfonate, or the like.

The phosphites include, for example, alkyl phosphite such as tris isodecyl phosphite or trilauryl phosphite, aryl phophite such as triphenyl phosphite or tris(nonylphenyl) phosphite, alkyl-aryl phosphite such as diphenyl isooctyl phosphite, diphenyl isodecyl phosphite, diisodecyl phenylphosphite, diisooctyl octyl phenylphosphite, or phenylneopentyl glycol phosphite, 2,4,6-tri-t-butylphenyl (2-butyl-2-ethyl-1,3-propanediol) phosphite. The plasticizers exemplified above may be used solely, or two or more plasticizers may be used in combination. The plasticizer is added in 1 to 40 parts by weight, preferably 3 to 30 parts by weight to 100 parts by weight of synthetic resin to which a foaming agent is added.

In the water-based synthetic resin, within a range without any influence on performance as the object of the present invention, additives such as an antidegradant, a crosslinking agent, an inorganic filler, a colorant, a flame retardant, or the like may be mixed and used.

Means for applying synthetic resin to which a foaming agent is added to fabric is not particularly specified, but known means can be used. For example, means for applying water-based synthetic resin to fabric, means for impregnating fabric with water-based synthetic resin, and means for spraying water-based synthetic resin to fabric are disclosed. The means for impregnation is preferable with convenient equipment and high workability, which can be performed at low cost. In particular, means for impregnating fabric with water and then impregnating the fabric with water-based synthetic resin is preferable.

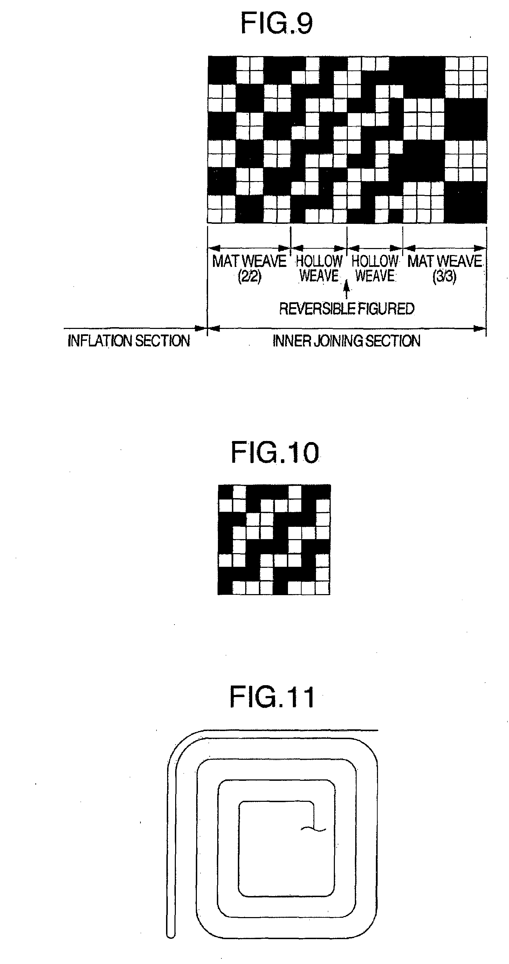

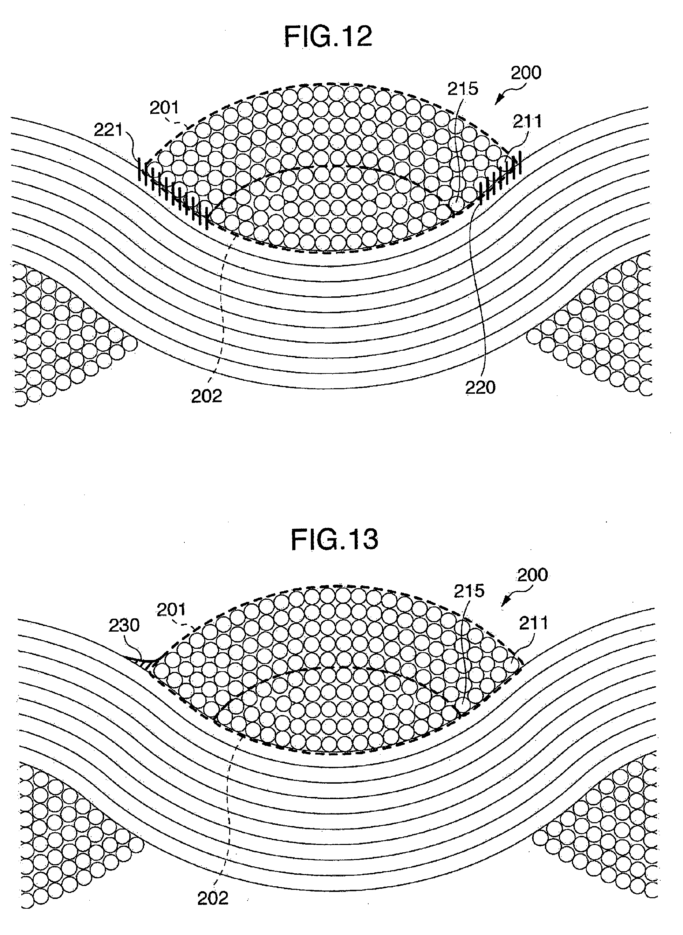

An effect of previously impregnating fabric with water is described with reference to Fig. 12. Fig. 12 is an enlarged sectional view of base fabric for a curtain airbag obtained by the present invention. Fig. 12 shows an intersection 200 of warp and weft yarns, and shows the warp and weft yarns crossing each other. The warp and weft yarns are each constituted by many single yarns. Synthetic resin is attached to single yarns located in a surface to nth layer of the warp and weft yarns (part 201 in Fig. 12). However, the fabric is impregnated with water, thereby preventing synthetic resin from attaching to single yarns in deeper layers shown by part 202 in Fig. 11. Thus, the fabric is previously impregnated with water to allow synthetic resin to be selectively attached to a part of the intersection 200 of warp and weft yarns, thereby achieving both intended low air permeability and high flexibility with a small amount of attached synthetic resin. The synthetic resin is preferably attached between single yarns of the warp or weft yarn in a surface layer 211 to a fifth layer 215 of the original yarn, and fills a gap between the warp yarns or the weft yarns at least at one portion. The way of filling the gap is not particularly limited, but synthetic resin preferably attaches across 10% or more, more preferably 30% or more of a diameter of a section of single yarn to fill the gap. When a length of 20 mm of a section of base fabric is observed, in 50% or more, preferably 70% or more, more preferably 80% or more of ends of the part 201 in the intersection 200 of the warp and weft yarns in the section, synthetic resin preferably attaches to a gap between warp and weft yarns constituted by three or more single yarns of either the warp or weft yarn in a portion where the warp and weft yarns contact such as the part 220 or 221. The way of filling the gap is not particularly limited, but synthetic resin preferably attaches across 10% or more, more preferably 30% or more of a diameter of a section of single yarn to fill the gap. Further, as denoted by 230 in Fig. 13, synthetic resin preferably attaches to 50% or more, preferably 70% or more, more preferably 80% or more of a recess between single yarns of the warp and weft yarns in the surface layer 201 of the original yarn to cover the recess. The way of covering the recess is not particularly limited, but the recess is preferably covered over a thickness corresponding to a diameter of one warp or weft yarn or more, and a thickness corresponding to diameters of five yarns or less.

A proportion of water impregnation is preferably 3% to 50% by weight, and more preferably 5% to 30% by weight. Within this range, the above-described advantage can be obtained, and synthetic resin for sufficiently reducing air permeability can be attached. Means for controlling the proportion of water impregnation is not particularly designated, but for example, means for squeezing with a mangle adjusted to proper pressure after water impregnation, means for sucking water by pressure reduction after water impregnation, and means for drying to a predetermined amount by air-drying or with a dryer after water impregnation are exemplified.

A concentration of synthetic resin to which a foaming agent is added in the water-based synthetic resin is not particularly limited, but 0.05% to 60% by weight, particularly, 1% to 50% by weight is preferable. This range of concentration is preferable in terms of controlling a proportion of attachment of the synthetic resin to which a foaming agent is added. A proportion of weight increase after attachment of the water-based synthetic resin is preferably 1% to 50% by weight, particularly 5% to 40% by weight with respect to dry base fabric. This range is preferable in terms of controlling a proportion of attachment of the synthetic resin to which a foaming agent is added and terms of processability with a short time to dry a solvent such as water. A temperature for drying the solvent after attachment of the water-based synthetic resin is not particularly limited as long as characteristics of the base fabric are not lost and the added foaming agent does not foam, and for example, 50°C to 220°C is preferable, and 100°C to 200°C is more preferable.

A proportion of attachment of the synthetic resin to which a foaming agent is added is preferably 0.1% to 20% by weight, more preferably 1% to 12% by weight, and further preferably 5% to 10% by weight. This range of the proportion of attachment of the synthetic resin to which a foaming agent is added can ensure sufficiently low air permeability, maintain high storability without reducing flexibility of the base fabric, and reduce the risk of a surface of fabric damaging skin of human body in operation of the airbag, the high-temperature gas foams the foaming agent, and thus formation of a protection structure and mixture with a foaming gas reduces a gas temperature to favorably increase heat resistance of the airbag.

Generally, an amount of added foaming agent is increased, an amount of foaming gas is increased to increase heat resistance, but a substantial amount of attached synthetic resin is reduced to increase air permeability. To ensure sufficiently low air permeability and increase heat resistance, a weight ratio of the synthetic resin attached to the base fabric to the foaming agent is preferably 99:1 to 60:40, more preferably 97:3 to 80:20, further preferably 97:3 to 90:10.

The airbag of the present invention can be produced by using airbag fabric to which synthetic resin to which at least a foaming agent is added is attached, cutting configuration parts according to required shapes, and sewing and/or bonding the configuration parts. A sewing method, a sewing yarn, a bonding method, and an adhesive are not particularly limited, but conventionally known methods and materials may be used. A sewing portion and/or a bonding portion is preferably sealed using known sealing means (a sealing tape or the like). The present invention also includes an airbag produced by attaching synthetic resin to which at least a foaming agent is added to airbag base fabric woven by an OPW method in which a joining portion is formed by interlacing weaving yarns into a predetermined shape in a predetermined position in a weaving stage using a loom including a Jacquard machine.

In production of the airbag fabric, calendering is preferably performed in any of steps before attachment of water-based synthetic resin. The calendering can close the gap in the intersection of the warp and weft yarns to further ensure low air permeability of the airbag fabric of the present invention. In the calendering, a heating temperature is preferably 180°C to 250°C. A pressing force is preferably 200 to 500 N/mm.

A known method of producing the airbag 10 may be used and is not particularly limited. For example, a production method for the case of attaching resin to which a foaming agent is added is exemplified, but not limited to this. In the case of an OPW method, original yarn subjected to sizing is usually used as warp yarn and weaved, and then synthetic resin to which a foaming agent is added is attached to the woven fabric to increase airtightness of the airbag. Though not particularly limited, scouring is preferably performed by a jigger scouring machine or a continuous scouring machine having a plurality of scouring vessels and water washing vessels, or the like, for the purpose of removing an oil agent and a sizing agent adhering to the original yarn prior to attachment of synthetic resin to which a foaming agent is added, so as not to inhibit adhesiveness of the synthetic resin to which a foaming agent is added and the woven fabric. After scouring, it is preferable that synthetic resin to which a foaming agent is added is attached to the woven fabric, and the fabric is dried and subjected to heat setting in order to control size and weave density.

Though not particularly limited when the present invention is carried out, in the machine-sewing method and the bonding method, scouring is not always needed when the warp yarn is woven without being subjected to sizing. However, when sizing yarn or the like is used, scouring needs to be performed. In this case, it is preferable that synthetic resin to which a foaming agent is added is attached to woven fabric after scouring, and heat setting is performed to control size and weave density as in the OPW method.

In the OPW method, after attachment of synthetic resin, the fabric is cut into predetermined sizes and shapes by a laser cutter, accessories such as a mounting tab for securing the airbag device to a vehicle are sewn, a mounting portion to a vehicle body is reinforced, and an airbag device of the present invention is produced.

In the machine-sewing method, after the base fabric to which synthetic resin is attached is cut into predetermined shapes and sizes, two pieces of fabric are laminated and sewn at predetermined positions. As described above, when airtightness is particularly required, a sealant such as a silicon sheet is held between the two pieces of fabric near seams, and the two pieces of fabric are sewn.

In the bonding method, after the base fabric to which synthetic resin is attached is cut into predetermined shapes and sizes, two pieces of fabric are placed on each other, and are sewn at predetermined positions. As described above, when airtightness is particularly required, a sealant such as a silicon sheet is held between the two pieces fabric near seams, and the two pieces of fabric are bonded.

### Examples

Next, the present invention will be described in detail based on examples.

### (1) Air permeability measurement device

Test samples were measured using an air permeability tester (FX3350) for an airbag manufactured by TEXTEST AG. A test head was set to 400 cc, and start pressure was set to 170 kPa. Air permeability at differential pressure of 100 kPa was read from test results, and when there are a plurality of air permeability data at differential pressure of 100 kPa, an average value thereof was calculated as air permeability at differential pressure of 100 kPa.

### (2) Cantilever type bending resistance measurement test

Test samples were measured under the provision of JIS L 1096 8.19.1 A (45° cantilever method).

### (3) Fire protection time

Test samples were cut into 150 mm squares and used as measurement samples, a tester for protective clothing against fire FPT-30A (manufactured by DAIEI KAGAKU SEIKI MFG. CO.,LTD) was used to measure a time for a temperature to increase 12°C by a method and under a condition provided by ISO9151 as a fire protection time.

### (4) Expansion test

A pyro-type inflator (maximum pressure of 220 kPa in 23.81 tank pressure test) and a sensor for measuring airbag internal pressure was mounted to test samples to perform a curtain bag expansion test, an expansion state of the airbag was photographed at high speed and changes in internal pressure of the airbag was measured. The expansion test was performed at environment temperatures of 25°C as a room temperature and 80°C as a high temperature. The presence or absence of breakage of the airbag was determined from an appearance test and a state of maintained internal pressure after the expansion test. The expansion speeds shown in Tables 1 to 3 were times when the internal pressure of the curtain bag reaches 50 kPa.

### [Examples 1 to 3]

Yarn including 72 single yarns of nylon 66 original yarn with fineness of 470 dTex manufactured by Asahi Kasei Fibers Corporation was used, and was subjected to sizing with a sizing agent mainly containing polyacrylic acid for warp yarn, and woven fabric in the form shown in Fig. 1 was woven by an air-jet loom (manufactured by Dornier Inc.) including a Jacquard machine (manufactured by Staubli KK) so that finished weave density was 57 warp yarns/2.54 cm, 48 weft yarns/2.54 cm. The inflation portion had a plane weave structure. The weave structure of each of the inner joining portions in the vicinity of a boundary with the inflation portion was the structure shown in Fig. 8. The weave structure on an inner side of the vicinity of the boundary between each inner joining portion and the inflation portion was the structure shown in Fig. 9.

The woven fabric was scoured by a continuous scouring machine. After drying, heat setting was performed at 180°C for one minute by a pin stenter. The woven fabric after the scouring and heat setting was impregnated with water, squeezed by a mangle, and then naturally dried to obtain base fabric with a proportion of application of water of 10 % by weight.

Synthetic resin to which a foaming agent was added containing mixtures of ethylene-vinyl acetate copolymer ("RD-321" manufactured by GOO CHEMICAL CO.,LTD) and a foaming agent A: azodicarbonamide ("CELMIC C-2" manufactured by SANKYO KASEI CO.,LTD.) at ratios of 98:2 (Example 1), 90:10 (Example 2), and 80:20 (Example 3) was prepared as water dispersions having a solid concentration of 30 % by weight, and the base fabric was impregnated with the water dispersions and then dried to obtain fabric for a curtain bag having a proportion of attachment of synthetic resin to which a foaming agent is added of 8 % by weight. This fabric was cut into a predetermined shape by a laser cutter (manufactured by LECTRA). Two pieces of cotton fabric (thickness of 0.5mm, fire protection time of 3.6 sec) woven in a katsuragi structure using 7 cotton yarn of 100% cotton cut to have a width of 100 mm and a length of 60 mm were coated with silicone resin, one piece of dry nylon fabric (thickness of 0.7 mm, fire protection time of 9.8 sec) cut into the same size was placed to cover a gas discharge port of an inflator with a coating surface on a side of the inflator (nylon fabric on the side of the inflator), and then the fabric was clamped with an airbag. Reinforcing sewing for a mounting portion to an automobile body and sewing of a front strap were performed to produce an airbag product. Further, the product was folded by the method shown in Fig. 10, and was temporarily fastened with a tape to produce a test sample. A predetermined test was performed for the sample.

Test results are shown in Table 1.

### [Examples 4 and 5]

An airbag was produced and a predetermined test was performed except that, in Example 2, synthetic resin to which a foaming agent was added was prepared as water dispersions having a solid concentration of 40 % by weight, a proportion of attachment of synthetic resin to which a foaming agent was added was 12 % by weight (Example 4), and synthetic resin to which a foaming agent foaming agent was added was prepared as water dispersions having a solid concentration of 10 % by weight, a proportion of attachment of synthetic resin to which a foaming agent was added was 4 % by weight (Example 5).

Test results are shown in Table 1.

### [Example 6]

An airbag was produced and a predetermined test was performed except that, in Example 2, 20 parts by weight of (5-ethyl-2-methyl-1,3,2-dioxaphosphin-5-yl) methyl dimethyl phosphonate-p-oxide was mixed as a plasticizer in 100 parts by weight of synthetic resin to which a foaming agent was added and used.

Test results are shown in Table 1.

### [Example 7]

An airbag was produced and a predetermined test was performed except that, in Example 2, yarn including 144 single yarns of nylon 66 original yarn with fineness of 470 dTex manufactured by Asahi Kasei Fibers Corporation was used.

Test results are shown in Table 1.

### [Example 8]

An airbag was produced and a predetermined test was performed except that, in Example 2, a foaming agent B: hydrazodicarbonamide ("CELMIC 142" manufactured by SANKYO KASEI CO.,LTD.) was used.

Test results are shown in Table 1.

### [Example 9]

An airbag was produced and a predetermined test was performed except that steps up to heat setting were performed in the same manner as in Example 2, and then ethylene-vinyl acetate copolymer ("RD-321" manufactured by GOO CHEMICAL CO.,LTD.) was prepared as water dispersions having a solid concentration of 30 % by weight, the base fabric was impregnated with the water dispersions and then dried to obtain airbag fabric.

Test results are shown in Table 1.

### [Example 10]

In Example 1, the woven fabric was scoured by a continuous scouring machine, after drying, heat setting was performed at 180°C for one minute by a pin stenter. An airbag was produced and a predetermined test was performed except that silicone resin (product No. DC3730 manufactured by Dow Coming Toray Silicone Co., Ltd.) was applied to the woven fabric after the scouring and the heat setting by knife coating by 35g/m² for each surface, and heated at 180°C for three minutes in a heating furnace to obtain fabric for a curtain airbag.

Test results are shown in Table 1.

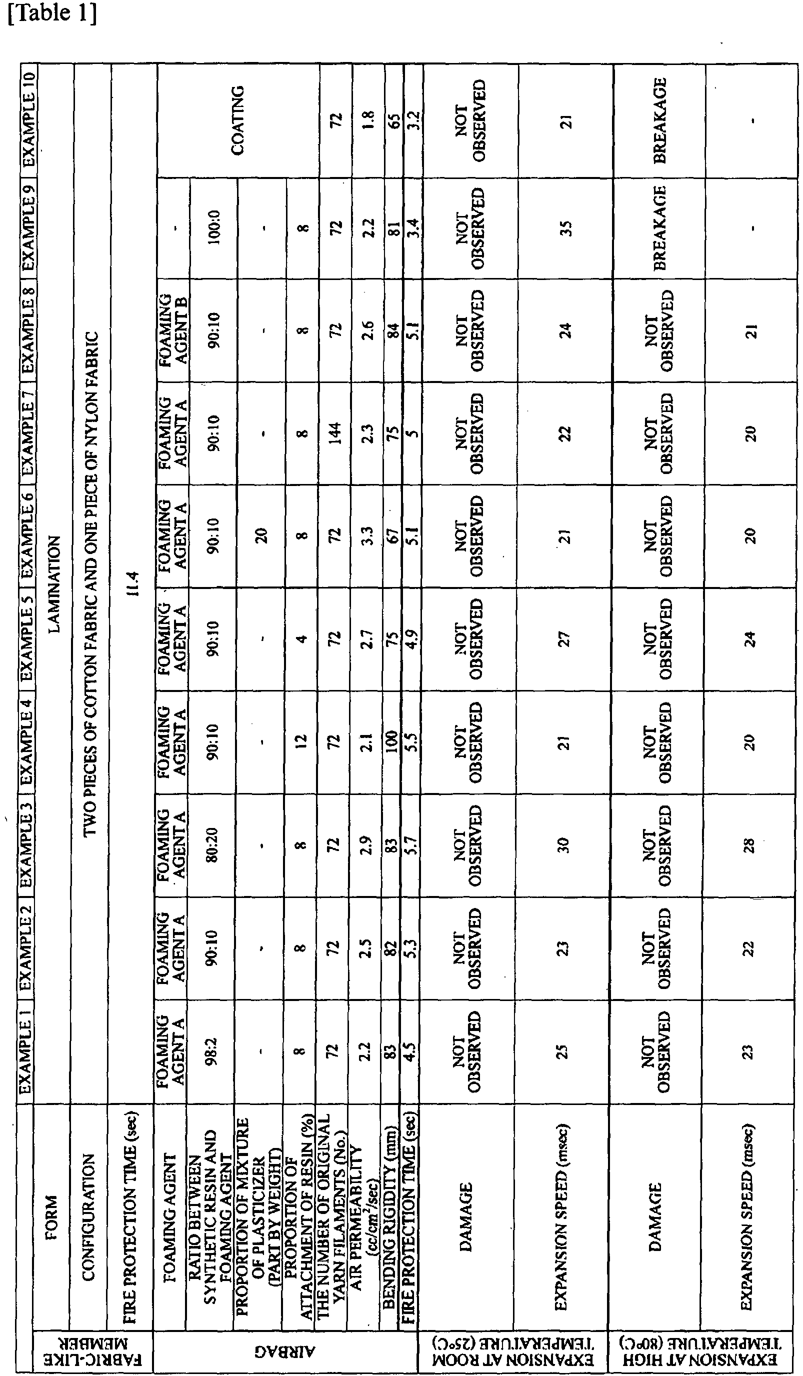

### [Examples 11 to 20]

An airbag was produced and a predetermined test was performed as in Examples 1 to 10 except that three pieces of blend fabric woven in a katsuragi structure using 7 cotton yarn of 65% cotton and 35% polyethylene terephthalate were laminated and used as a fabric-like member. A thickness of the blend fabric was 0.7 mm and a fire protection time was 6.9 sec.

Test results are shown in Table 2

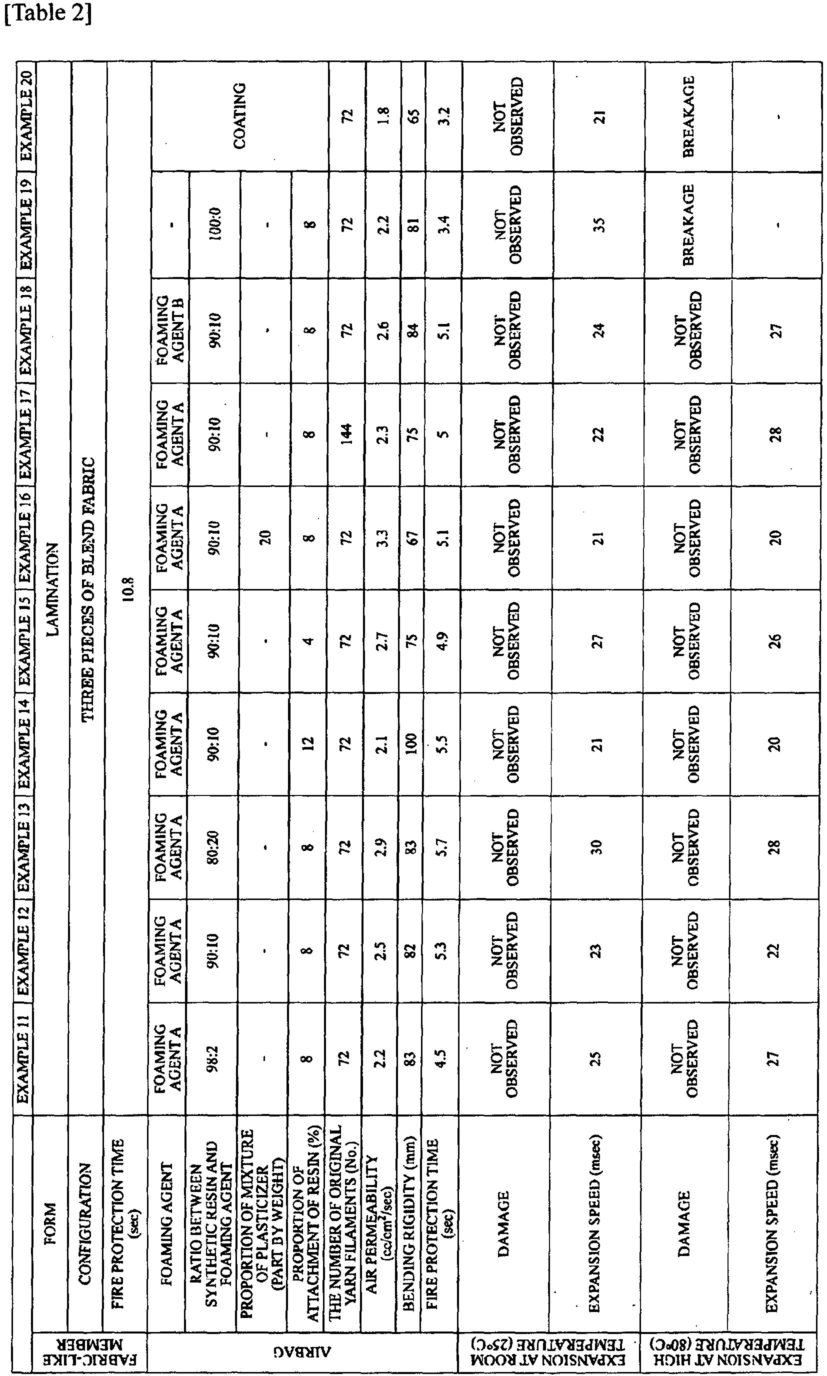

### [Example 21]

An airbag was produced and a predetermined test was performed except that, in Example 1, three pieces of laminated cotton fabric was used as a fabric-like member (Example 21).

Test results are shown in Table 3.

### [Examples 22 and 23]

An airbag was produced and a predetermined test was performed except that three pieces of laminated fire retarding cotton fabric (thickness of 0.5 mm, fire protection time of 3.8 sec) with one surface coated by 70g/m² with ethylene-vinyl acetate copolymer ("RD-321" manufactured by GOO CHEMICAL CO.,LTD.) containing 50% by weight of aluminum hydroxide as a flame retardant was used as a fabric-like member (Example 22), and three pieces of laminated cotton fabric (thickness of 0.5 mm, fire protection time of 4.5 sec) subjected to foaming treatment and impregnated with water dispersions of synthetic resin to which a foaming agent was added containing mixtures of ethylene-vinyl acetate copolymer ("RD-321" manufactured by GOO CHEMICAL CO.,LTD) and a foaming agent A: azodicarbonamide ("CELMIC C-2" manufactured by SANKYO KASEI CO., LTD.) at a ratio of 90:10 having a solid concentration of 30 % by weight was used as a fabric-like member (Example 23).

Test results are shown in Table 3.

### [Comparative examples 1 and 2]

An airbag was produced and a predetermined test was performed as in Example 9 (comparative example 1) and as in Example 10 (comparative example 2) except that a fabric-like member was not used.

Test results are shown in Table 3.

### [Comparative examples 3 and 4]

An airbag was produced and a predetermined test was performed as in Example 9 (comparative example 3) and as in Example 10 (comparative example 4) except that three pieces of laminated nylon fabric was used as a fabric-like member.

Test results are shown in Table 3.

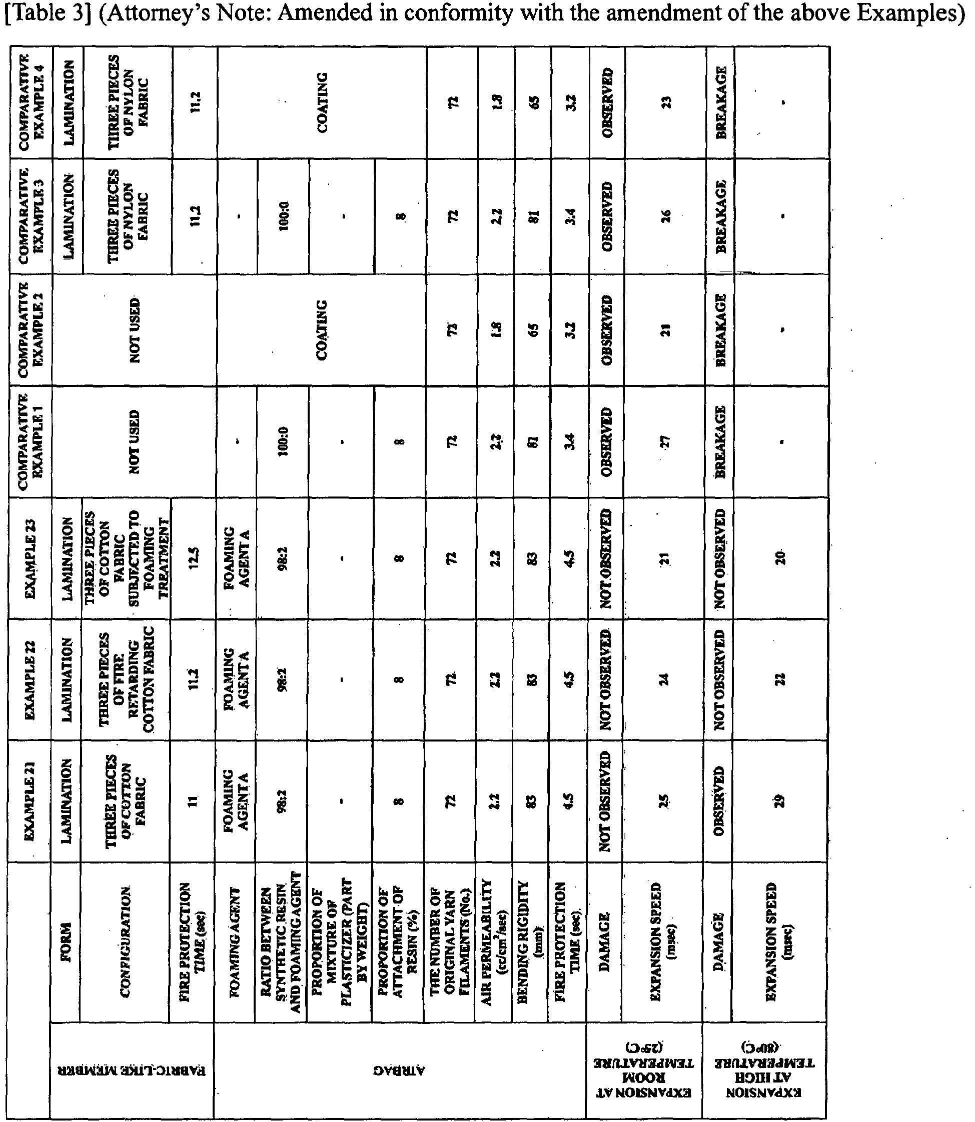

As shown in Tables 1 to 3, the airbag device according to the present invention is clearly effective for increasing protective functionality of an occupant because the airbag does not break even when expanded at room temperature and high-temperature, and the expansion speed is sufficiently high. In particular, the airbag does not break even when expanded at high-temperature, which is a severe condition for the airbag, and sufficient protective functionality of an occupant can be provided. A lightweight and soft fabric-like member is used to eliminate the need for a metal guide cylinder. Thus, a lightweight airbag device with high storability can be provided, and an airbag device that can accommodate a reduced weight required by automobiles can be achieved.

### Industrial Applicability

The present invention is effective as a device for protecting an occupant of a vehicle, particularly an automobile, in a collision. In particular, the present invention is effective for a lightweight and small airbag device that has high storability and also high performance of ensuring safety of an occupant.

## Claims

1. An airbag device (1) comprising:
an airbag (10) inflatable and expandable by introduction of a gas;
an inflator (40) that discharges a gas from a gas discharge port (42) and supplies the gas into the airbag (10); and
a fabric-like member (60) that surrounds the gas discharge port so as to open into the airbag (10),
**characterized in that**
the fabric-like member (60) includes at least a cellulosic fiber, and that
the fabric-like member (60) is subjected to at least any of flame retardant treatment, anti-flaming treatment, heat resisting treatment, and foaming treatment.

2. The airbag device (1) according to claim 1, wherein the fabric-like member (60) includes 30% to 100% by weight of cellulosic fiber.

3. The airbag device (1) according to claim 1 or 2, wherein the fabric-like member (60) includes at least a short fiber.

4. The airbag device (1) according to claim 1, wherein the airbag device (1) further includes an inner bag or an inner tube that is placed in the airbag (10) and guides the gas from the gas discharge port to an inflatable region of the airbag (10).

## Patentansprüche

1. Airbagvorrichtung (1) umfassend:
Einen Airbag (10), der durch Einführen von Gas aufblasbar und ausdehnbar ist;
einen Gasgenerator (40), der ein Gas von einer Gasabgabemündung (42) abgibt und das Gas in den Airbag (10) liefert;
einen textilartigen Teil (60) der die Gasabgabemündung umgibt, um sich in den Airbag (10) hin zu öffnen, **dadurch gekennzeichnet, dass** der textilartige Teil (60) wenigstens eine Zellulosefaser umfasst, und dass
der textilartige Teil (60) wenigstens einer aus einer flammenhemmenden Behandlung, einer flammenerlöschenden Behandlung, einer Wärmewiderstandsbehandlung und einer Schaumbehandlung unterworfen ist.

2. Airbagvorrichtung 1 nach Anspruch 1, worin der textilartige Teil (60), 30 Gewichtsprozent bis 100 Gewichtsprozent einer Zellulosefaser enthält.

3. Airbagvorrichtung 1 nach Anspruch 1 oder 2, worin der textilartige Teil (60) wenigstens eine kurze Faser umfasst.

4. Airbagvorrichtung 1 nach Anspruch 1, worin die Airbagvorrichtung 1 ferner einen inneren Bag oder eine innere Röhre umfasst, die in dem Airbag 10 angeordnet ist und das Gas von der Gasabgabemündung zu einem aufblasbaren Bereich der Airbagvorrichtung 10 führt.

## Revendications

1. Dispositif de type coussin de sécurité gonflable (1) comprenant:
- un coussin (10) gonflable et expandable par l'introduction d'un gaz;
- un dispositif de gonflage (40) qui décharge un gaz à partir d'un port de décharge de gaz (42) et fournit le gaz dans le coussin (10); et
- un élément de tissu (60) qui environne le port de décharge de gaz de manière à déboucher dans le coussin (10),
**caractérisé en ce que**
- l'élément de tissu (60) comprend au moins une fibre de cellulose, et que
- l'élément de tissu (60) est soumis à au moins l'un quelconque d'entre le traitement ignifuge, le traitement anti-flamme, le traitement de résistance à la chaleur, et le traitement de moussage.

2. Dispositif de type coussin de sécurité gonflable (1) selon la revendication 1, où l'élément de tissu (60) comprend 30% à 100% en poids de fibre de cellulose.

3. Dispositif de type coussin de sécurité gonflable (1) selon la revendication 1 ou 2, où l'élément de tissu (60) comprend au moins une fibre courte.

4. Dispositif de type coussin de sécurité gonflable (1) selon la revendication 1, où le dispositif de type coussin de sécurité gonflable (1) comprend de plus un sachet ou un tube intérieur qui est placé dans le coussin (10) et fait guider le gaz à partir du port de décharge de gaz à une région gonflable du coussin (10).
